Europäisches Patentamt

European Patent Office

Office européen des brevets

(19)

(11) Veröffentlichungsnummer: **0 159 385**
**B1**

(12) **EUROPÄISCHE PATENTSCHRIFT**

(45) Veröffentlichungstag der Patentschrift:
**13.07.88**

(51) Int. Cl.⁴: **F 16 L 17/02**

(21) Anmeldenummer: **84104753.3**

(22) Anmeldetag: **27.04.84**

(54) **Dichtungsring, Muffe mit Dichtungsring und deren Verwendung.**

(43) Veröffentlichungstag der Anmeldung:
**30.10.85 Patentblatt 85/44**

(45) Bekanntmachung des Hinweises auf die Patenterteilung:
**13.07.88 Patentblatt 88/28**

(84) Benannte Vertragsstaaten:
**AT BE CH DE FR GB IT LI NL SE**

(56) Entgegenhaltungen:
**CH - A - 564 718**
**FR - A - 2 457 429**
**US - A - 3 015 510**

(73) Patentinhaber: **WOCO Franz-Josef Wolf & Co.,
Sprudelallee 19, D-6483 Bad Soden-Salmünster (DE)**

(72) Erfinder: **Wolf, Franz-Josef, Sprudelallee 19, D-6483 Bad
Soden-Salmünster (DE)**
Erfinder: **Lauer, Hans-Jörg, Marburger Strasse 5,
D-6483 Bad Soden-Salmünster (DE)**

(74) Vertreter: **Jaeger, Klaus, Dipl.-Chem. Dr. et al, Jaeger,
Steffens & Köster Patentanwälte Pippinplatz 4a,
D-8035 München-Gauting (DE)**

ACTORUM AG

**Beschreibung**

Die Erfindung betrifft einen Dichtungsring aus elastischem Werkstoff der im Oberbegriff des Anspruchs 1 genannten Art sowie eine mit diesem Dichtungsring bestückte Muffe für eine Rohrsteckverbindung und die Verwendung des Dichtungsringes.

Ein Dichtungsring der im Oberbegriff des Anspruchs 1 genannten Art ist aus der europäischen offengelegten Patentanmeldung EP-A-104 310 bekannt. Der Vorteil dieses bekannten Dichtungsringes für eine Rohrsteckverbindung liegt darin, daß er aufgrund seiner glatten zylindrischen Innenfläche kostengünstig auf einem zylindrischen Kern mit einem mindestens zweiteiligen, diesen Kern umschließenden Formwerkzeug hergestellt werden kann. Nachteilig an diesem Dichtungsring ist, daß er zur axialen Fixierung am Muffenkragen abgestützt werden muß und daß eine axial relativ lange Haltemanschette zwischen dem sich am Muffenkragen abstützenden Haltering und dem eigentlichen Dichtungsabschnitt des Dichtungsringes erforderlich ist. Der Dichtungsring wird dadurch teuer und eignet sich nur für spezielle Anwendungsgebiete, beispielsweise für Steckverbindungen in Rohrsystemen aus gebranntem Ton, während er für andere Aufgaben ungeeignet ist, beispielsweise für Steckverbindungen zwischen Kunststoffrohren.

Auch für Kunststoffrohre wird inzwischen die Forderung nach einem im wesentlichen unverlierbar in der Ringnut der Muffe vormontierten Dichtungsring laut. Dieses Erfordernis der Unverlierbarkeit vermag der bislang für Kunststoffrohr-Steckverbindungen gebräuchliche O-Ring nicht mehr zu erfüllen. Überdies ist der O-Ring auch zunehmend weniger geeignet, die steigenden Anforderungen an die Dichtheit der Rohrsteckverbindung zu erfüllen.

Für den Fachmann ist ersichtlich, daß der Dichtungsring zur Einhaltung der zunehmenden Anforderungen an die Dichtheit solcher Kunststoffrohr-Steckverbindungen nur durch einen Lippenring zu erfüllen sind, wenn die zur Herstellung der Steckverbindung erforderlichen Einschubkräfte nicht ungebührlich ansteigen sollen. Unverlierbare Lippendichtungsringe insbesondere für Kunststoffrohrmuffen, bei denen der Dichtungsring durch Verformen der Muffe fixiert wird, sind aus der deutschen Auslegeschrift DE-B-27 17 487 bekannt, während solche Lippendichtungsringe, die durch einen Klemmring in einer vorgeformten Ringnut der Kunststoffrohrmuffe fixiert sind, in jüngerer Zeit aus den deutschen Gebrauchsmustern DE-U-83 33 286 und DE-U-83 37 150 bekannt geworden sind. Beide Lösungen für das Fixieren eines Dichtungsringes in einer Kunststoffrohrmuffe, nämlich das Fixieren durch Verformen der Muffe nach dem Einlegen des Dichtungsringes einerseits und das Fixieren des Dichtungsringes durch einen zusätzlichen Halterring andererseits, sind in der Herstellung bzw. in der Montage kostenaufwendige Lösungen, die von dem unter starkem Kostendruck stehenden Baumaterialmarkt nicht aufgenommen werden, ganz abgesehen von den offensichtlichen technischen Mängeln, die beiden Lösungen anhaften. Die bekannten Klemmringe üben keine positive radial aufweitende federnde Klemmkraft auf die Dichtungsringe aus und lassen die Dichtungsringe daher nur relativ lose in der Nut liegen, während das Verfahren der Muffenverformung und des Einschließens eines Halteringabschnitts des Dichtungsringes zeitaufwendig, damit also produktivitätsmindernd, und materialaufwendig, und damit im Sinne einer unbefriedigenden technischen Lösung kostentreibend sind.

Angesichts dieses Standes der Technik liegt der Erfindung die Aufgabe zugrunde, einen Dichtungsring der eingangs genannten Art zu schaffen, insbesondere für Kunststoffrohr-Steckverbindungen unter Verwendung einer im wesentlichen mit rechteckigem Querschnitt versehenen Ringnut in der Muffe, der auch ohne Zuhilfenahme zusätzlicher Fixierungsmittel ausreichend unverlierbar in der Ringnut vormontiert werden kann und zudem bei vorgegebenem Dichtspaltdurchmesser relativ leicht hergestellt werden kann, also materialsparend und damit kostengünstig hergestellt werden kann und dennoch auch gesteigerten Anforderungen entsprechend dichte Rohrsteckverbindungen bei geringen Einschubkräften herzustellen ermöglicht.

Zur Lösung dieser Aufgabe schafft die Erfindung einen Dichtungsring der im Oberbegriff des Anspruchs 1 genannten Art, der erfindungswesentlich die im kennzeichnenden Teil des Anspruchs 1 genannten Merkmale aufweist. Die Erfindung schafft zur Lösung dieser Aufgabe weiterhin eine Muffe mit einer Ringnut, in der ein solcher Dichtungsring eingesetzt oder eingelegt ist.

Der Dichtungsring gemäß der Erfindung wird vorzugsweise für Kunststoffrohr-Steckverbindungen verwendet, bei denen die Muffe im Kragenbereich eine Ringnut mit rechteckigem Querschnitt, insbesondere mit den Abmessungen der deutschen Industrienorm, aufweist.

Erfindungswesentliches Merkmal des Dichtungsringes ist also insbesondere, daß er zwei fließend axial ineinander übergehende radial vorspringende flanschartige Wulstringe trägt, die voneinander verschiedene Außendurchmesser aufweisen und zwischen sich eine nach radial außen offene Ringnut einschließen, und daß die auf der Seite des Wulstringes mit dem größeren Außendurchmesser liegende Stirnseite des Dichtungsringes zumindest im wesentlichen eine konkav gekrümmte Fläche ist. «Zumindest im wesentlichen» heißt dabei, daß diese stirnseitige Fläche des Dichtungsringes auch konvexe Übergangsabschnitte, insbesondere Übergangsabschnitte zur zylindrischen Innenfläche des Dichtungsringes, aufweisen kann, aber auf ihrer gesamten radialen Ausdehnung doch primär durch eine hinterschnittfreie konkave Krümmung gekennzeichnet ist. Dabei ist der Schnurquerschnitt dieses Dichtungsringes insgesamt vorzugsweise so bemessen, daß das kleinste, das Schnurprofil umhüllende Viereck zumindest angenähert ein Quadrat ist oder von dieser Form nur mäßig im Sinne einer axialen Rechteckverzerrung des Quadrats abweicht. Vorzugsweise liegt das Verhältnis der grössten radialen Schnurbreite des Dichtungsringes zur axialen Länge der inneren zylindrischen Mantelfläche des Dichtungsringes im Bereich von ungefähr 1:1 bis 1:1,5.

Der Dichtungsring ist speziell für den Einsatz in einer Muffen-Ringnut mit zumindest im wesentlichen rechteckigem Querschnitt bestimmt. «Zumindest im wesentlichen» heißt dabei, daß die Sohlenkanten und die Kragenkanten der Nut nicht als scharfkantige rechte Winkel ausgebildet zu sein brauchen, sondern auch mehr oder minder stark abgerundet sein können, wie dies bei der Herstellung der Nut in Rohrmuffen aus Kunststoff oder mineralischem Werkstoff in aller Regel der Fall ist. Wesentlich an der Kontur der Nut ist, daß die Sohle der Nut, auf der die Außenränder der beiden Wulstringe des Dichtungsringes abgestützt sind, eine Zylinderfläche ist. Außerdem sollten die die beiden Seitenwände der Nut bildenden Flächen zumindest im großen und ganzen in der Radialebene liegende Kreisringflächen sein, wobei es bei diesen Flächen jedoch nicht besonders kritisch ist, wenn sie um einige Grad, beispielsweise um 10° bis 20° aus der Radialebene abweichen.

In die in diesem Sinne «zumindest im wesentlichen rechteckige» Ringnut in einem Muffenkragen wird der Dichtungsring bestimmungsgemäß so eingesetzt, daß die Außenränder beider Wulstringe auf dem Boden oder der Sohle der nach radial zum Muffeninneren offenen Ringnut aufliegen und auf dieser Sohle abgestützt sind. Dabei liegt der Wulstring mit dem kleineren Außendurchmesser auf der dem Muffenkragen näher liegenden Seite der Nut, während der Wulstring mit dem größeren Außendurchmesser auf der dem Muffenspiegel näher liegenden Seite der Ringnut liegt. Weiterhin ist der elastische Dichtungsring im entspannten Zustand, also vor dem Einlegen in die Nut, relativ zur Nut so bemessen, daß der Außendurchmesser des den kleineren Außendurchmesser der beiden Wulstringe des Dichtungsringes aufweisenden Wulstringes zumindest gleich, vorzugsweise zur Erzeugung einer radial einwärts gerichteten Vorspannung im Dichtungsring angemessen größer als der Innendurchmesser der zylindrischen Nutsohle ist. «Angemessen größer» soll in diesem Zusammenhang heißen, daß der Außendurchmesser des kleineren Wulstringes um bis zu 10 oder 20 Prozent größer als der Innendurchmesser der Nutsohle sein kann.

Für die im Einzelfall tatsächlich zu wählende Bemessung des Durchmessers des kleineren Wulstringes zum Durchmesser der Nutsohle wird sich der Fachmann davon leiten lassen, daß der Dichtungsring in diesem Ringabschnitt mit einer mäßig großen radialen Kompressionsvorspannung in der Nut liegen soll, und zwar mit einer Vorspannung, die zwar den Wulstring mäßig verformt, aber auf den Schnurquerschnitt des Dichtungsringes im übrigen nicht wesentlich verformend wirkt. Unter diesen Bemessungskriterien wird es dann von der Formgebung bzw. dem Profil des kleineren Wulstringes und der Härte des Werkstoffs, aus dem der elastische Dichtungsring hergestellt ist, abhängen, mit welcher Relation der Außendurchmesser des kleineren Wulstringes zum Innendurchmesser der Ringnutsohle letztlich festgelegt wird.

Entsprechend der Profilierung des Dichtungsringes weist der andere radial vorspringende Wulstring einen deutlich größeren Außendurchmesser als der vorstehend beschriebene kleinere Wulstring auf. Da auch dieser Wulstring bei bestimmungsgemäß in die Muffe eingelegtem Dichtungsring auf derselben zylindrischen Sohle der Ringnut abgestützt ist, auf der der kleinere Wulstring in der vorstehend beschriebenen Weise aufliegt und abgestützt ist, erfährt der Ringquerschnitt durch den aufgrund der physikalischen Gegebenheiten herbeigeführten elastischen Spannungsausgleich eine Zwangstorsion der Art, daß der, vom Muffenkragen aus gesehen, axial innen liegende Rand der im entspannten Zustand zylindrischen Innenwand des Dichtungsringes durch radiale Stauchung einen wesentlich kleineren Durchmesser aufweist als der auf der Seite des kleineren Dichtungsringes liegende axial auswärtige Rand der Innenfläche des Dichtungsringes. Beim Hineinblicken in den Dichtungsring in axialer Richtung vom Muffenkragen her weist der bestimmungsgemäß in die Ringmuffe eingesetzte Dichtungsring also zumindest im wesentlichen eine sich verjüngende Konusfläche auf. «Zumindest im wesentlichen» heißt in diesem Zusammenhang, daß die je nach Härte des Materials und je nach Durchmesserdifferenz der Wulstringe vom eingebauten Ring tatsächlich angenommene Fläche auch durch mehr oder minder starke konkave Flächenkrümmung von der mathematischen Kegelfläche abweichen kann.

Der zum Muffenkragen weisende größere Innendurchmesser des Dichtungsringes im eingebauten Zustand ist vorzugsweise zumindest im wesentlichen gleich dem Innendurchmesser der zylindrischen Muffe und ist in jedem Fall größer als der Außendurchmesser des zur Herstellung der Rohrsteckverbindung in die mit dem Dichtungsring bestückte Muffe einzuschiebenden Spitzendes. Der im eingebauten Zustand des Dichtungsringes zum Muffenspiegel gekehrte kleinere Innendurchmesser des Dichtungsringes ist in jedem Fall deutlich kleiner als der Außendurchmesser des Spitzendes. Der im Einbauzustand kleinere, axial innen liegende Innendurchmesser des Dichtungsringes ist dabei selbstverständlich um so viel kleiner als der Außendurchmesser des Spitzendes, daß dieser Durchmesser beim Einschieben und Durchschieben des Spitzendes um so viel aufgeweitet wird, daß die dadurch nach radial innen wirkende Rückstellkraft des elastischen Werkstoffes des Dichtungsringes ausreichend groß ist, um die für den speziellen Einsatzzweck geforderte Dichtkraft aufzubringen. Andererseits darf dieser kleinere Durchmesser des eingebauten Dichtungsringes nicht so viel kleiner als der Außendurchmesser des Spitzendes sein, daß das Spitzende nicht mehr oder nur mit unzweckmäßigem Kraftaufwand durch den Dichtungsring hindurchschiebbar ist. In ersichtlicher Weise sind durch diese Bemessungskriterien gleichzeitig auch die Bemessungskriterien für den Aussendurchmesser des zugeordneten größeren Wulstringes gegeben.

Aus dem vorstehend Gesagten ist ersichtlich, daß durch die nach axial innen weisende konkave Stirnfläche des Dichtungsringes der axial und radial innen liegende Rand- und Kantenbereich des Dichtungsringes als Dichtlippe wirkt. Die konkave Ringstirnfläche ermöglicht dabei sowohl die Konturverformung des Dichtungsringes beim Einschieben des Spitzendes und bei eingeschobenem Spitzende und bewirkt gleichzeitig eine Erhöhung des Anpreßdrucks der inneren Dichtlippe des Dichtungsringes am Außenmantel des eingeschobenen Spitzendes bei Erhöhung des Innendrucks im Steckverbindungsbereich der Rohrleitung.

Um die reinen im Dichtungsring bei eingeschobenem Spitzende wirksamen Kompressionsspannungsanteile auf das für die Dichtfunktion des Dichtungsringes unerläßliche Minimum zu reduzieren und den Spannungsverformungsanteil so groß wie möglich und sinnvoll zu halten, ist die nach radial außen offene Ringnut zwischen den beiden Wulstringen des Dichtungsringes prinzipiell so groß wie möglich gehalten. Die Grenze für dieses tendenzielle Bemessungskriterium ist dabei in der Stabilität des Ringes in sich und der beiden Wulstringe gezogen. Diese im Dichtungsring ausgebildete und nach radial außen offene Ringnut darf nicht so breit und so tief ausgebildet sein, daß die Schnur des Dichtungsringes beim Einbau des Dichtungsringes in die nach radial innen offene Ringnut der Muffe statt einer Zwangstorsion des Ringquerschnittes, also einer Torsionsverspannung, ausgesetzt zu sein, lediglich spannungsarm einknickt. Gleicherweise dürfen die beiden radial auswärts stehenden Wulstringe des Dichtungsringes beim Einsetzen des Dichtungsringes in die Ringnut der Muffe nicht lediglich praktisch spannungsfrei umknicken, sondern müssen formstabil-elastisch in der Lage sein, radial einwärts gerichtete Kompressionskräfte aufzunehmen. Im Rahmen dieser Bemessungsgrenzen soll die durch die nach radial außen offene Ringnut zwischen den beiden Wulstringen des Dichtungsringes und dem zwischen den beiden Auflagepunkten der Wulstringe liegenden Wandbereich der nach radial innen offenen Ringnut in der Muffe gebildete Ringkammer so groß wie möglich sein, um dem Dichtungsring ausreichend Raum zur Konturverformung beim Einschieben des Spitzendes einzuräumen.

Der so ausgebildete und relativ zur Ringnute der Muffe konturierte und bemessene Dichtungsring ist in seiner Einbaulage in der Ringnut der Muffe vor dem Einschieben des Spitzendes wesentlich durch eine Zwangstorsionsverspannung des Schnurquerschnitts und damit des Dichtungsringes insgesamt gekennzeichnet, die zu einer signifikanten Verfestigung und Stabilisierung des Dichtungsringes in der Ringnut der Muffe führt. Durch diese zusätzliche Zwangstorsions-Spannungsverformung wird der Dichtungsring gemäss der Erfindung im Gegensatz zu allen bekannten Dichtungsringen auch bereits ohne Hilfsmittel praktisch «unverlierbar» im Sinne der von der Praxis vorgegebenen Spezifikation.

Dieser Vorteil des Dichtungsringes gemäß der Erfindung schließt jedoch nicht aus, daß auch der Dichtungsring gemäß der Erfindung durch zusätzliche Hilfsmittel in der Nut der Muffe verankert werden kann, so beispielsweise durch Verkleben und/oder Zuhilfenahme eines an sich gebräuchlichen Klemmringes, Spannringes, Halteringes oder Versteifungsringes insbesondere aus Kunststoff oder Metall. Solche Halteringe, wenn sie berücksichtigt werden sollten, werden vorzugsweise in den zum Muffenkragen liegenden Wulstring mit dem kleineren Außendurchmesser integriert, weil von diesem Wulstring sowohl beim Einbau des Dichtungsringes in die Muffe als auch beim Herstellen der Rohrsteckverbindung durch Einschieben des Spitzendes die geringere Beweglichkeit als von dem Wulstring mit dem größeren Außendurchmesser abverlangt wird. Die Integration eines solchen zusätzlichen Verankerungsringes in dem Wulstring mit dem kleineren Außendurchmesser kann dabei durch Ausbildung einer zumindest teilweise axial offenen oder zugänglichen ringförmigen Ausnehmung oder Ringnut erfolgen, in die der Verankerungsring oder Versteifungsring einsetzbar oder einlegbar oder einspannbar ist. Selbstverständlich kann ein solcher Stabilisierungsring auch von vornherein in den Wulstring mit dem kleineren Außendurchmesser einvulkanisiert sein. All diese Varianten werden mit dem Begriff der «Integration» des Wulstringes mit einem zusätzlichen Ring aus Kunststoff oder Metall verstanden und erfaßt.

Schließlich sollte die axiale Höhe des Dichtungsringes nicht oder zumindest nicht wesentlich kleiner als die axiale Breite der Ringnut in der Muffe sein, um die angestrebte Einbaustabilität des Dichtungsringes in der Ringnut zu gewährleisten. Im Hinblick auf dieses Erfordernis ist die axiale Höhe oder Breite des Dichtungsringes vorzugsweise gleich oder geringfügig größer als die axiale Breite der Nut in der Muffe.

Die Erfindung ist im folgenden anhand eines Ausführungsbeispiels in Verbindung mit den Zeichnungen näher erläutert. Es zeigen:

Figur 1 in Teildarstellung und im Axialschnitt ein Ausführungsbeispiel des Dichtungsringes im entspannten Zustand; und

Figur 2 den in Figur 1 gezeigten Dichtungsring im Einbauzustand in einer Ringnut mit rechteckigem Querschnitt.

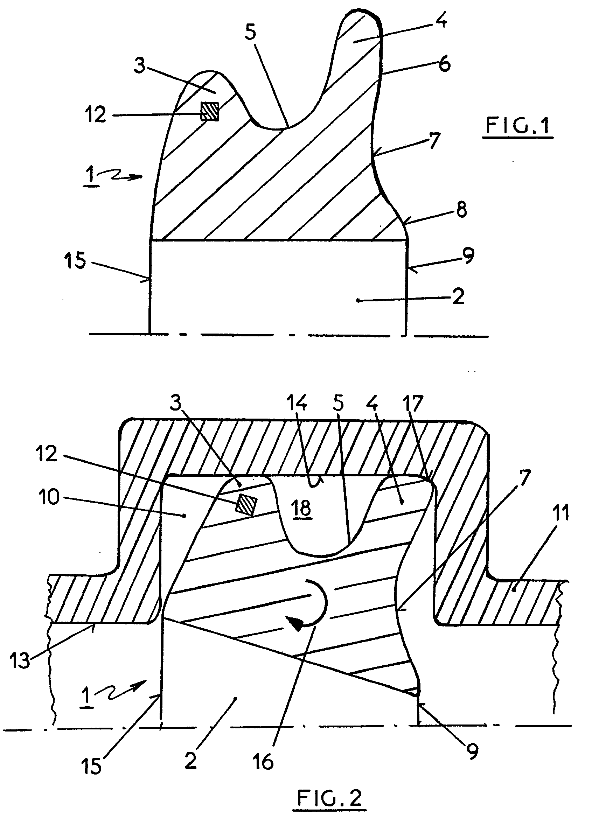

Der in den Figuren 1 und 2 gezeigte Dichtungsring 1 besteht aus Gummi und hat eine Härte von ungefähr 70 Shore A. In dem in Figur 1 gezeigten entspannten Zustand des Dichtungsringes 1 weist dieser eine streng zylindrische Innenfläche 2 auf. Nach radial auswärts kragen zwei flanschartige Wulstringe 3, 4 mit unterschiedlichen Außendurchmessern vor. Die beiden Wulstringe 3, 4 gehen fließend ineinander über und schließen zwischen sich eine nach radial außen offene Ringnut 5 ein. Die beiden Wulstringe 3, 4 und die von diesen beiden Wulstringen gebildete und eingeschlossene Ringnut 5 bilden gemeinsam das radial äußere Profil des Dichtungsringes 1, das sich zumindest im wesentlichen mit dem Verlauf von 1½ Sinuswellen mit ungleich hohen Amplituden vergleichen läßt, wenn man den Außenabschnitt des Schnurprofils im Axialschnitt betrachtet. Die auf der Seite des radial vorspringenden Wulstringes 4 mit dem größeren Außendurchmesser liegende Stirnseite 6 des Dichtungsringes 1 ist im wesentlichen und bestimmend als konkav gekrümmte Fläche 7 ausgebildet. Lediglich ein radial innen liegender Übergangsabschnitt 6 ist zur Versteifung des Randes 9 der innen liegenden Zylinderfläche 2 des Dichtungsringes 1 konvex gekrümmt. Dieser konvex gekrümmte Flächenabschnitt 8 stellt jedoch einen Übergangsabschnitt dar und verändert nicht den primär konkaven Krümmungscharakter der Stirnfläche 6.

Um ein Entfernen des Dichtungsringes 1 aus der in Figur 2 gezeigten Ringnut 10 in der Muffe 11 eines Kunststoffrohres zu erschweren, ist im Wulstring 3 mit dem kleineren Außendurchmesser ein in sich geschlossener Stahlring 12 einvulkanisiert, dessen Durchmesser größer als der Durchmesser der zylindrischen Innenwand 13 der Muffe 11 und kleiner als der Innendurchmesser der zylindrischen Sohle 14 der Nut 10 ist.

In dem in Figur 1 gezeigten entspannten Zustand des Dichtungsringes 1 ist der Außendurchmesser des Wulstringes 3 um 10 Prozent größer als der Innendurchmesser der die Nutsohle 14 bildenden Zylinderfläche der Nut 10. Dies bewirkt, daß in der in Figur 2 gezeigten Weise der Dichtungsring bei seiner bestimmungsgemäßen Einbaulage in der Ringnut 10 im Bereich des Wulstringes 3 unter radialer Kompressionsspannung steht. Der axial außen liegende Rand 15 der im entspannten Zustand zylindrischen Innenwandfläche 2 des Dichtungsringes 1 weist in der in Figur 2 gezeigten Einbaulage des Dichtungsringes einen Durchmesser auf, der zumindest im wesentlichen gleich oder geringfügig größer als der Innendurchmesser der zylindrischen Innenwandfläche 13 der Muffe 11 ist.

In der in Figur 2 symbolisch durch den Pfeil 16 angedeuteten Weise wird der Dichtungsring 1 in seiner Einbaulage dadurch, daß der Außendurchmesser des Wulstringes 4 wesentlich größer als der Außendurchmesser des Wulstringes 3 ist, mit einer Zwangstorsions-Verspannungsverformung beaufschlagt, die zum einen zu einer Verkleinerung des freien Durchmessers des Randes 9 der Zylinderfläche 2, zum anderen zu einem verstärkten Andruck des Außenrandes des Wulstringes 3 auf der Sohle 14 der Nut 10 führt. Der Dichtungsring und insbesondere der Wulstring 4 sind dabei in der aus Figur 2 ersichtlichen Weise vorzugsweise so dimensioniert und auf die Kontur der Ringnut 10 der Muffe 11 abgestimmt, daß sich der Außenrand des Wulstringes 4 in der axial innen liegenden und radial außen liegenden Ringkante 17 der Ringnut 10 abstützen kann. Der in der in Figur 2 gezeigten Weise in die Ringnut 10 der Muffe 11 eingesetzte Dichtungsring ist aus dieser nur noch mit gezielt eingesetztem und relativ großem Kraftaufwand entfernbar, erfüllt also die Voraussetzung der Unverlierbarkeit im Sinne der praktischen Anforderung. Diese Voraussetzung ist dabei selbst dann erfüllt, wenn der zusätzliche Versteifungsring 12 nicht im Wulstring 3 einvulkanisiert ist.

Zur Herstellung einer Rohrsteckverbindung wird durch den gemäß Figur 2 in die Ringnut 10 der Muffe 11 eingelegten Dichtungsring 1 ein Spitzende hindurchgeschoben, dessen Außenmantel einen Durchmesser aufweist, der kleiner als der Einbaudurchmesser des muffenkragenseitigen Randes 15 der im Einbauzustand jetzt konisch verformten Innenfläche 2 und größer als der Durchmesser des muffenspiegelseitigen Randes 9 dieser Innenfläche 2 des Dichtungsringes 1 ist. Dabei wird in ersichtlicher Weise der Dichtungsring 1 an seinem Innenrand 9 durch das Hindurchschieben des Spitzendes so aufgeweitet und verformt, daß der Wulstring 4 und der Innenrand 9 des Dichtungsringes 1 mit der von beiden Teilen eingeschlossenen konkaven Fläche 7 funktionell ein Spreiz-Dichtlippenpaar bilden. Dabei dient die von der Ringnut 5 des Dichtungsringes 1 und der Sohle 14 der Ringnut 10 der Muffe 11 gebildete Ringkammer 18 als Ausweichkammer für den sich beim Einschieben des Spitzendes verformenden Dichtungsring, dessen Kompressionsverformungsanteile dadurch auf das unbedingt erforderliche Minimum reduziert werden können. Gleicherweise kann auch der durch den konkaven Flächenabschnitt 7 in der muffenspiegelseitigen Stirnseite 6 des Dichtungsringes 1 gebildete kammerartige Leerraum der Aufnahme von Konturverformungen dienen.

Der in den Figuren 1 und 2 gezeigte Dichtungsring ist dadurch ungewöhnlich kostengünstig herstellbar, daß er aufgrund seiner im entspannten Zustand glatten zylindrischen Innenfläche auf einem zylindrischen Formkern in einem Spritzgießwerkzeug hergestellt werden kann, das eine axiale Folge von mehreren Formnestern hintereinander aufweist. Beim Entformen brauchen die Dichtungsringe ohne jede Zusatzvorrichtung lediglich glatt vom Formkern abgestreift zu werden. Durch seine Ausbildung nach Art eines Lippendichtungsringes erfüllt der Dichtungsring auch hohe Ansprüche an die Dichtheit der Rohrsteckverbindung. Überdies erfüllt der Dichtungsring durch seine Zwangstorsion in der Einbaulage und seine damit einhergehende Versteifung die von der Praxis an solche Ringe gestellte Forderung der Unverlierbarkeit des Dichtungsringes im eingebauten Zustand. Zu beachten ist dabei, daß diese Torsionsvorspannung des Dichtungsringes beim Einschieben des Spitzendes zumindest teilweise aufgehoben wird, das Spitzende also nicht gegen einen sich versteifenden, sondern durch einen sich beim Einschieben erweichenden Ring geschoben werden muß. Schließlich ist zu beachten, daß der Dichtungsring auch ohne den in den Figuren der Vollständigkeit halber dargestellten Versteifungsring 12 ohne Zuhilfenahme von zusätzlichen Halteringen oder Klemmringen und ohne Zuhilfenahme einer nachträglichen Verformung der Kunststoffmuffe fest und unverlierbar in der Muffe 11 des Kunststoffrohres vormontiert werden kann.

**Patentansprüche**

1. Dichtungsring aus elastischem Werkstoff mit im entspannten Zustand zumindest im wesentlichen glatter zylindrischer Innenfläche (2) und radial auswärts vorkragenden flanschartigen Wulstringen (3, 4) mit unterschiedlichem Außendurchmesser, dadurch gekennzeichnet, daß die beiden Wulstringe ineinander übergehen und ein Schnurprofil aufweisen, das zumindest im wesentlichen dem Verlauf von 1½ Sinuswellen mit ungleich hohen Amplituden entspricht, und daß die auf der Seite des Wulstringes (4) mit dem größeren Außendurchmesser liegende Stirnseite (6) des Dichtungsringes (1) als zumindest im wesentlichen konkav gekrümmte Fläche (7) ausgebildet ist.

2. Dichtungsring nach Anspruch 1, dadurch gekennzeichnet, daß das Verhältnis der größten radialen Schnurbreite des Dichtungsringes zur axialen Länge der inneren Zylindermantelfläche (2) des Dichtungsringes (1) im Bereich von 1:1 bis 1:1,5 liegt, die Form des kleinsten das Schnurprofil umhüllenden Vierecks also zumindest nicht wesentlich von der des Quadrates abweicht.

3. Dichtungsring nach einem der Ansprüche 1 oder 2, gekennzeichnet durch einen im Wulstring (3) mit dem kleineren Außendurchmesser integrierten Klemm-, Spann-, Halte- oder Versteifungsring (12) aus Kunststoff oder Metall.

4. Zylindrische Muffe, insbesondere Kunststoffrohrmuffe (11), mit einer im Kragenbereich ausgebildeten Ringnut (10) mit zumindest im wesentlichen rechteckigem Querschnitt und mit einem in diese Ringnut (10) eingelegten Dichtungsring (1) nach einem der Ansprüche 1 bis 3, dadurch gekennzeichnet, daß der Dichtungsring (1) so in der Nut (10) liegt, daß der Wulstring (3) mit dem kleineren Außendurchmesser zum Muffenkragen liegt und daß beide radialen Außenränder der Wulstringe (3, 4) auf der Sohle (14) der Nut (10) anliegend abgestützt sind, wobei der Dichtungsring (1) so bemessen ist, daß im entspannten Zustand des Dichtungsringes vor dessen Einbau in die Nut (10) der Muffe (11) der Außendurchmesser des den kleineren Außendurchmesser aufweisenden Wulstringes (3) gleich oder vorzugsweise geringfügig größer als der Innendurchmesser der zylindrischen Nutsohle (14) ist, so daß der Dichtungsring also unter radialer Vorspannung und Zwangstorsion des Ringquerschnittes in der Nut liegt, und daß der größte Innendurchmesser (15) des Dichtungsringes in Einbaulage an der dem Muffenkragen zugewandten Stirnseite des Dichtungsringes (1) zumindest im wesentlichen gleich dem Innendurchmesser (13) der Muffe (11) ist.

5. Muffe mit Dichtungsring nach Anspruch 4, dadurch gekennzeichnet, daß die axiale Breite des Dichtungsringes (1) gleich oder nur geringfügig größer als die axiale Breite der Nut (10) ist.

6. Muffe mit Dichtungsring nach einem der Ansprüche 4 oder 5, dadurch gekennzeichnet, daß der Dichtungsring (1) in die Nut (10) eingeklebt ist.

7. Verwendung des Dichtungsringes nach einem der Ansprüche 1 bis 3 für Kunststoffrohr-Steckverbindungen mit Rechteck-Ringnut in der Muffe.

**Claims**

1. A sealing ring made of an elastic material with an essentially smooth cylindrical inner surface (2) when there is no deformation stress acting on said sealing ring and with flange-type ring-shaped elements (3, 4) protruding radially outwards having different outer diameters, characterized in that said both protruding ring-shaped elements are merging into one another and are comprising a cross-sectional profile showing at least essentially the course of 1½ sine-type waves with different amplitudes, and that the front side (6) of the sealing ring (1) being adjacent to the protruding ring-shaped element (4) having the larger outer diameter is shaped as an at least essentially concave area (7).

2. A sealing ring according to claim 1, characterized in that the numeric relationship of the largest radial cross-sectional profile width of the sealing ring to the axial length of the inner cylindrically-shaped surface (2) of the sealing ring (1) is in the range of 1:1 to 1:1.5, which means that the smallest rectangle enveloping the cross-sectional profile of the sealing ring is at least essentially square-shaped.

3. A sealing ring according to one of the claims 1 or 2, characterized by a ring (12) made of plastics or metal for stiffening, clamping or fixing purposes provided inside the protruding ring-shaped element (3) having the smaller outer diameter.

4. A cylindrically-shaped sleeve, especially a sleeve (11) of a plastic tube, comprising a ring-shaped groove (10) in the inner surface of the radial wall of the sleeve having an at least essentially rectangular cross-sectional profile and a sealing ring (1) according to one of the claims 1 to 3 inserted into said ring-shaped groove (10), characterized in that the sealing ring (1) is lying in the groove (10) such that the protruding ring-shaped element (3) having the smaller outer diameter is looking to the axially outer edge of the sleeve and that both radially outer edges of the protruding ring-shaped elements (3, 4) are supported lying close to the ground (14) of the groove (10), whereat the sealing ring (1) is dimensioned such that, when there is no deformation stress acting on the sealing ring before inserting the sealing ring into the groove (10) of the sleeve (11), the outer diameter of the protruding ring-shaped element (3) having the smaller outer diameter is equal to or preferably slightly larger than the inner diameter of the cylindrically-shaped ground (14) of the groove, which means that the sealing ring is lying radially stressed and torsionally deformed with respect to its cross-section in the groove and that the largest inner diameter (15) of the sealing ring inserted in the groove on its front side looking to the axially outer edge of the sleeve is at least essentially equal to the inner diameter (13) of the sleeve (11).

5. A sleeve with a sealing ring according to claim 4, characterized in that the axial width of the sealing ring (1) is equal to or only slightly larger than the axial width of the groove (10).

6. A sleeve with a sealing ring according to one of the claims 4 or 5, characterized in that the sealing ring (1) is adhesively bonded into the groove (10).

7. The use of a sealing ring according to one of the claims 1 to 3 in a sleeve-joint for plastic tubes provided with a rectangular ring-shaped groove inside the sleeve.

**Revendications**

1. Bague d'étanchéité en matériau élastique qui, à l'état détendu, présente une surface intérieure (2) au moins sensiblement cylindrique et lisse et des bourrelets annulaires (3, 4) de diamètres extérieurs différents qui font saillie comme des brides vers l'extérieur dans le sens radial, caractérisée en ce que les deux bourrelets annulaires se raccordent l'un à l'autre et présentent un profil de cordon qui correspond au moins sensiblement au tracé d'ondes sinusoïdales à 1½ d'amplitudes inégales et en ce que la paroi frontale (6) de la bague d'étanchéité (1) qui est située du côté du bourrelet annulaire (4) qui a le plus grand diamètre extérieur comporte une surface incurvée (7) au moins essentiellement concave.

2. Bague d'étanchéité selon la revendication 1, caractérisée en ce que le rapport entre la plus grande largeur dans le sens radial du cordon de la bague d'étanchéité et la longueur dans le sens axial de la surface cylindrique intérieure (2) est compris entre 1:1 et 1:1,5, de sorte que la forme du plus petit rectangle entourant le profil du cordon ne s'écarte au moins pas sensiblement de celle du carré.

3. Bague d'étanchéité selon l'une des revendications 1 ou 2, caractérisée en ce qu'elle comporte, intégrée dans le bourrelet annulaire (3) qui a le plus petit diamètre extérieur, une bague (12) de serrage, de tension, de maintien ou de raidissement en matière plastique ou en métal.

4. Manchon cylindrique, notamment manchon tubulaire (11) en matière plastique qui comporte, dans sa zone de collier, une rainure annulaire (10) ayant une section au moins sensiblement rectangulaire et contenant, insérée dans cette rainure annulaire (10), une bague d'étanchéité (1) selon l'une des revendications 1 à 3, caractérisé en ce que la bague d'étanchéité (1) est placée dans la rainure (10) de telle manière que le bourrelet annulaire (3) qui a le plus petit diamètre extérieur s'applique contre le collier du manchon et que les deux bords extérieurs dans le sens radial des bourrelets annulaires (3, 4) prennent appui sur le fond (14) de la rainure (10), la bague d'étanchéité (1) ayant des dimensions telles que, lorsque la bague d'étanchéité est à l'état détendu avant son insertion dans la rainure (10) du manchon (11), le diamètre extérieur du bourrelet annulaire (3) qui a le plus petit diamètre extérieur est égal ou, de préférence, légèrement supérieur au diamètre intérieur du fond cylindrique (14) de la rainure, de sorte que la bague d'étanchéité est engagée dans la rainure avec une précontrainte radiale et une torsion forcée de la section de la bague, et en ce que le plus grand diamètre intérieur (15) de la bague d'étanchéité au niveau de la paroi frontale de la bague d'étanchéité (1) qui, après montage, est tournée vers le collier du manchon est au moins sensiblement égal au diamètre intérieur (13) du manchon (11).

5. Manchon comportant une bague d'étanchéité selon la revendication 4, caractérisé en ce que la largeur dans le sens axial de la bague d'étanchéité (1) est égale ou seulement légèrement supérieure à la largeur dans le sens axial de la rainure (10).

6. Manchon comportant une bague d'étanchéité selon l'une des revendications 4 ou 5, caractérisée en ce que la bague d'étanchéité (1) est fixée par collage dans la rainure (10).

7. Utilisation de la bague d'étanchéité selon l'une des revendications 1 à 3 pour la réalisation d'assemblages d'insertions de tubes en matière plastique comportant une rainure annulaire rectangulaire dans le manchon.

FIG.1

FIG.2